# EUROPÄISCHE PATENTSCHRIFT

(11) **EP 2 028 926 B1**
(45) Veröffentlichungstag und Bekanntmachung des Hinweises auf die Patenterteilung: **24.10.2012**
(21) Anmeldenummer: 07726073.5
(22) Anmeldetag: 19.06.2007
(51) Int. Cl.: A01J 5/01, G01F 1/72, G01F 1/74, G01F 3/38

(54) **EINRICHTUNG ZUR ERFASSUNG EINES MILCHSTROMS**
DEVICE FOR DETECTING A FLOW OF MILK
DISPOSITIF POUR DÉTECTER UN ÉCOULEMENT DE LAIT

(30) Priorität: 20.06.2006 DE 102006028748
(43) Veröffentlichungstag der Anmeldung: 04.03.2009
(73) Patentinhaber: GEA WestfaliaSurge GmbH, 59199 Bönen (DE)
(72) Erfinder: KNOCHE, Reinhold, 59269 Beckum-Vellern (DE); SPRINGER, Andreas, 59269 Beckum (DE); OLMEDO, Juan, 59302 Oelde-Lette (DE)
(74) Vertreter: Neumann, Ditmar
(86) Internationale Anmeldenummer: PCT/EP2007/005380
(87) Internationale Veröffentlichungsnummer: WO 2007/147555

(56) Entgegenhaltungen:
- EP-A1- 0 509 288
- EP-A1- 0 733 884
- WO-A-01/29518

## Beschreibung

Der Gegenstand der Erfindung bezieht sich auf eine Einrichtung zur Erfassung eines Milchstroms, der in einem Kanal, welcher einen Eintritt und einen Austritt aufweist, fließt. Innerhalb des Kanals sind wenigstens zwei elektrisch leitende Elemente vorgesehen.

Einrichtungen zur Erfassung eines Milchstroms sind in unterschiedlichen Ausführungen und Ausgestaltungen bekannt. Durch das Gebrauchsmuster 295 03 450 ist eine Einrichtung bekannt, welche eine Durchflusskammer aufweist, in der zwei Elektroden angeordnet sind. Mittels einer solchen Einrichtung kann beispielsweise eine Schwellwertprüfung erfolgen. Die Schwellwertprüfung bildet eine Grundlage für die Steuerung des Melkvorgangs. Wird beispielsweise ein Schwellwert unterschritten, so erfolgt eine Melkzeugabnahme.

Eine weitere Ausgestaltung einer Einrichtung zur Erfassung eines Milchstroms ist beispielsweise durch die EP 0 509 288 A1 vorbekannt. Auch diese Einrichtung weist einen Kanal auf, in dem zwei beabstandet zueinander angeordnete Elektroden vorgesehen sind. Die EP 0 509 288 beschreibt des Weiteren Einrichtungen zur Erfassung eines Milchstroms, bei denen die Erfassung kapazitiv oder optisch erfolgt.

Voraussetzung für die Erfassung des Milchstroms nach der EP 0 509 288 ist, dass die Einrichtung in einem Abschnitt einer Steigleitung erfolgt, da die Länge eines Milchpfropfens erfasst wird.

WO 01/29518 beschreibt auch eine Einrichtung zur Erfassung eines Milchstroms in einem Kanal, der einen Eintritt und einen Austritt aufweist. In dem Kanal ist ein Leitfahigkeitssensor vorgesehen, der drei ringförmige und beabstandet zueinander angeordnete Elemente aufweist. Dem Leitfähigkeitssensor nachgeordnet ist eine Kammer mit einer Messeinheit vorgesehen, in der ein Farbsensor geordnet ist, mittels dessen die Farbgebung der Milch analysiert wird. In der Kammer ist auch ein zweiter Leitfähigkeitssensor vorgesehen, aus dem die Leitfahigkeit der Milch bestimmt werden kann.

Die Erfassung des Milchstroms und insbesondere die Bestimmung der Milchmenge ist relativ problematisch, da Milch auch als schäumende Flüssigkeit in dem Kanal strömen kann. So kann der Milchstrom eine flüssige Phase und eine Schaumphase aufweisen, deren Leitwerte unterschiedlich sind. Zur Lösung dieses Problems ist durch die DE-A1-37 37 607 ein Verfahren zur Durchführung zur Messung an schäumender Flüssigkeiten vorgeschlagen worden, bei dem an der in einem Gefäß enthaltenden Flüssigkeit in mehreren unterschiedlichen Höhenniveaus jeweils ein von einem Parameter der Flüssigkeit abhängiger Messwert gemessen wird. Hierzu ist zum Messen der spezifischen Dichte der Milch auf den verschiedenen Höhenniveaus eine im Wesentlichen entgaste Flüssigkeit enthaltende Bezugmessstrecke vorgesehen. In Abhängigkeit davon, ob ein in Luft gemessener entsprechender Messwert größer oder kleiner als der auf der Bezugstrecke erhaltende Bezugswert ist, wird für jedes Höhenniveau eine Verhältniszahl entsprechend dem Verhältnis aus dem Bezugsmesswert und dem Messwert auf diesem Höhenniveau bzw. entsprechend dem Kerrwert dieses Verhältnisses gebildet. Um dies vornehmen zu können, ist eine Messkammer vorgesehen, die eine Vielzahl von übereinander geordneten Elektroden aufweist, welche die entsprechenden Höhenniveaus bilden.

Der apparative Aufwand zur Ausgestaltung einer solchen Einrichtung sowie zur Auswertung der Messergebnisse ist relativ hoch.

Hiervon ausgehend liegt der vorliegenden Erfindung die Zielsetzung zugrunde eine Einrichtung zur Erfassung eines Milchstroms anzugeben, welche einen einfachen Aufbau aufweist. Eine weitere Aufgabe liegt darin, eine Einrichtung zur Erfassung eines Milchstroms anzugeben, bei der eine zuverlässige Abschätzung der geflossenen Milchmenge möglich ist.

Diese Aufgaben werden erfindungsgemäß durch eine Einrichtung zur Erfassung eines Milchstroms mit den Merkmalen des Anspruchs 1 gelöst. Vorteilhafte Weiterbildungen und Ausgestaltungen der Erfindung sind Gegenstand der abhängigen Ansprüche.

Die erfindungsgemäße Einrichtung zur Erfassung eines Milchstroms weist einen Kanal auf, der einen Eintritt und einen Austritt hat. Im Kanal sind wenigstens zwei elektrisch leitende Elemente vorgesehen, welche beabstandet zueinander angeordnet sind. Wenigstens ein Element ist im Wesentlichen ringförmig ausgebildet. Des Weiteren ist wenigstens ein Element im Wesentlichen stiftförmig ausgebildet. Der Kanal weist wenigstens eine Kammer auf, die in Strömungsrichtung der Milch betrachtet hinter den Elementen angeordnet ist. Die Kammer weist wenigstens eine Messwerteinheit zur Leitwertmessung der Milch auf. Mit Hilfe der Messeinheit und der Kammer kann zuverlässig der Verlauf des Leitwertes der Milch ermittelt werden. Dieser Verlauf erlaubt Rückschlüsse auf den Gesundheitszustand des milchgebenden Tieres. Die Leitwertmessung ermöglicht auch die Bestimmung des Vorgemelks. Anhand des Wertes des Leitwertes des Vorgemelks können Rückschlüsse auf eine mögliche Mastitiserkrankung des milchgebenden Tieres geschlossen werden. Die Kammer weist eine Eintrittsöffnung auf. Vor der Eintrittsöffnung der Kammer ist wenigstens ein Strömungselement angeordnet. Durch das Strömungselement wird erreicht, dass die Milch in die Kammer strömt, ohne dass große Turbolenzen vorhanden sind. Diese Ausgestaltung hat den Vorteil, dass die Einrichtung zur Erfassung eines Milchstroms, insbesondere zur Bestimmung von Milchmengen im Milchvolumenstrom-Bereich von 0,0 bis 9,0 1/min, geeignet ist. Hierbei wird eine relativ hohe Genauigkeit hinsichtlich der Milchmenge erreicht. Durch diese erfindungsgemäße Ausgestaltung einer Einrichtung zur Erfassung eines Milchstroms wird ein relativ einfacher Aufbau der Einrichtung erreicht. Überraschender Weise wird eine relativ hohe Messgenauigkeit erzielt.

Das wenigstens eine stiftförmig ausgebildete Element kann unterschiedliche Querschnittsformen aufweisen. Hierbei kann das stiftförmige Element im Querschnitt polygonal, insbesondere dreieckig, viereckig oder sechseckig ausgebildet sein. Es besteht auch die Möglichkeit, dass der Querschnitt eine ovale, insbesondere eine im Wesentlichen kreisförmige Form aufweist. Es ist nicht zwingend, dass das stiftförmige Element eine Querschnittsfläche aufweist, die in Längsrichtung des Elementes betrachtet konstant ist. Es besteht auch die Möglichkeit, das Element so auszubilden, dass es einen über die Länge des Elementes variierenden Querschnitt aufweist. Hierbei kann das stiftförmige Element im Bereich wenigstens eines Endes einen größeren Querschnitt als im mittleren Bereich aufweisen. Bei dem stiftförmigen Element ist die lichte Breite des Elementes im Verhältnis zur Länge des Elementes kleiner, vorzugsweise wesentlich kleiner.

Das stiftförmige Element besteht vorzugsweise aus wenigstens einem elektrisch leitenden Material. Bei dem Material kann es sich um ein Metall und/oder einen elektrisch leitenden Kunststoff handeln.

Die erfindungsgemäße Einrichtung zur Erfassung eines Milchstroms kann auch dazu genutzt werden, abgeschlagene Melkbecher bzw. ein abgeschlagenes Melkzeug zu erkennen. Dies erfolgt dadurch, da der Milchfluss permanent mittels der Elektroden erfasst wird, kann eine schlagartige Änderung des Milchflusses auch zeitnah erkannt werden. Wird ein Melkbecher oder das gesamte Melkzeug abgeschlagen, so steigt durch die einströmende Luft die Strömungsgeschwindigkeit in dem Kanal an. Darüber hinaus kann durch die schlagartige Änderung des Leitwertes bzw. der Leitfähigkeit des im Kanal strömenden Fluids gefolgert werden, dass wenigstens ein Melkbecher oder das gesamte Melkzeug abgeschlagen worden ist.

Um die wenigstens zwei elektrisch leitenden Elemente von einander zu trennen wird vorgeschlagen, dass der Kanal wenigstens einen Abschnitt zwischen zwei benachbarten Elementen aufweist, welche aus einem elektrisch nicht leitenden Material besteht. Besonders bevorzugt ist eine Ausgestaltung der Einrichtung, bei der der Kanal aus wenigstens einem elektrisch nicht leitenden Polymer gebildet ist.

Bevorzugt ist dabei insbesondere eine Ausgestaltung, bei der das wenigstens eine ringförmige Element ein integraler Bestandteil des Kanals ist. Die Anordnung des ringförmigen Elementes sollte vorzugsweise so sein, dass das ringförmige Element einen inneren Querschnitt aufweist, der im Wesentlichen einem Innenquerschnitt des Kanals entspricht. Weist der Kanal einen kreisförmigen Querschnitt auf, so entspricht der Innendurchmesser des ringförmigen Elementes im Wesentlichen dem Innendurchmesser des Kanals. Durch eine solche Ausgestaltung im Kanal wird erreicht, dass durch das ringförmige Element keine Unstetigkeiten entstehen, durch welche es zu Turbolenzen innerhalb der strömenden Milch kommt. Darüber hinaus werden durch eine solche Anordnung Druckverluste verringert.

Die Einrichtung, welche einen Kanal aufweist, ist vorzugsweise so angeordnet, dass der Kanal, der eine Längsachse aufweist, gegenüber einer Vertikalen geneigt ist. Hierdurch wird erreicht, dass Milch aus dem Kanal abfließen kann. Dies gilt auch für Reinigungsflüssigkeiten oder Desinfektionsflüssigkeiten, die zum Reinigen des Kanals verwendet werden.

Gemäß einer noch weiteren vorteilhaften Ausgestaltung der erfindungsgemäßen Einrichtung wird vorgeschlagen, dass das Verhältnis der Breite des ringförmigen Elementes zum Innendurchmesser des wenigstens eines ringförmigen Elementes zwischen 0,1 und 25, vorzugsweise zwischen 3 und 5, liegt. Besonders bevorzugt ist eine Ausgestaltung, bei der das Verhältnis der Breite des ringförmigen Elementes zum Innendurchmesser des wenigstens einen ringförmigen Elementes in etwa 4,3 beträgt. Besonders bevorzugt ist eine Ausgestaltung der Einrichtung, bei der das ringförmige Element eine Breite von ca. 5 mm hat. Diese Breite ist besonders bevorzugt bei einem Kanal mit einem Innendurchmesser von 25 mm.

Gemäß einer noch weiteren vorteilhaften Ausgestaltung der Erfindung wird vorgeschlagen dass das wenigstens eine stiftförmig ausgebildete Element einen im Wesentlichen kreisförmigen Querschnitt aufweist. Durch diese Form des Querschnittes wird eine gleichmäßige Umströmung des Elementes erreicht. Darüber hinaus beeinflusst das stiftförmige Element die Strömung der Milch im Kanal nicht negativ.

Nach einer noch weiteren vorteilhaften Ausgestaltung der Einrichtung wird vorgeschlagen, dass das wenigstens eine stiftförmige Element eine Breite, vorzugsweise einen Durchmesser aufweist, die bzw. der zwischen 1 mm und 8 mm liegt. Besonders bevorzugt ist eine Breite bzw. ein Durchmesser, der zwischen 2,5 und 3,5 mm liegt. Es hat sich herausgestellt, dass eine Breite bzw. ein Durchmesser des stiftförmigen Elementes von 3 mm eine besonders bevorzugte Ausgestaltung ist.

Das stiftförmige Element ist vorzugsweise in dem Kanal im Wesentlichen radial angeordnet. Es weist vorzugsweise eine Länge auf, welche den Durchmesser des Kanals aufweist. Das stiftförmige Element schneidet vorzugsweise die Längsachse des Kanals unter im Wesentlichen einem rechten Winkel. Dies ist nicht zwingend notwendig. Das stiftförmige Element kann die Längsachse des Kanals unter einem Winkel zwischen 45° und 135° schneiden. Durch die bevorzugte Ausgestaltung der Anordnung des stiftförmigen Elementes wird sichergestellt, dass der Milchstrom stets mit dem stiftförmigen Element in Kontakt ist.

Nach einer noch weiteren vorteilhaften Ausbildung der Einrichtung wird vorgeschlagen, dass zwei benachbarte Elemente, insbesondere ein ringförmiges Element und ein stiftförmiges Element in einem Abstand L zueinander angeordnet sind. Das Verhältnis des Abstandes zum Innendurchmesser des wenigstens einen ringförmigen Elementes liegt zwischen 0,2 und 2,0. Bevorzugt ist eine Ausgestaltung, bei der das Verhältnis des Abstandes zum Innendurchmesser des wenigstens einen ringförmigen Elementes zwischen 0,4 und 0,7 beträgt. Insbesondere wird vorgeschlagen, dass dieses Verhältnis bei etwa 0,55 liegt. Beträgt der Abstand zwischen einem ringförmigen Element und dem stiftförmig ausgebildeten Element 12 mm, so werden relativ sichere Werte für die Erfassung des Milchstroms erreicht.

Die Anordnung der Elemente ist vorzugsweise so gewählt, dass in Strömungsrichtung der Milch betrachtet das stiftförmig ausgebildete Element wenigstens einem ringförmigen Element nachgeordnet ist.

Das ringförmig ausgebildete Element und das stiftförmig ausgebildete Element sind vorzugsweise mit einer elektronischen Schaltung verbunden, so dass die Elemente Elektroden bilden, mittels derer und der Schaltung die elektrische Leitfähigkeit und/oder der Leitwert der strömenden Milch ermittelt wird.

Das vor der Eintrittsöffnung der Kammer angeordnete Strömungselement ist vorzugsweise durch das stiftförmig ausgebildete Element gebildet. Durch diese Ausgestaltung der Einrichtung wird eine Vereinfachung der Einrichtung erreicht, da das stiftförmige Element einerseits als Elektrode und andererseits als Strömungselement dient. Das Strömungselement wirft einen Strömungsschatten auf die Kammer, so dass verhindert wird, dass bei Strömungen, insbesondere bei Strömungen größer als 4 1/min, Turbolenzen entstehen, die den Messvorgang in der Kammer beeinflussen.

Die Messeinheit, welche in der Kammer angeordnet ist, umfasst vorzugsweise zwei Elektroden. Die Elektroden können stiftförmig ausgebildet sein. Sie weisen vorzugsweise einen Durchmesser von ca. 1 mm, insbesondere von 1,5 mm, auf. Die Elektroden sind nebeneinander in Strömungsrichtung betrachtet angeordnet und weisen vorzugsweise einen Abstand von ca. 7 mm auf.

Gemäß einer noch weiteren vorteilhaften Ausgestaltung der Erfindung wird vorgeschlagen, dass die Kammer eine Austrittsöffnung aufweist, vorzugsweise eine Austrittsöffnung, deren Querschnitt sich erweitert. Hierdurch wird ein Abfließen der sich in der Kammer ansammelnden Milch erreicht. Die Erweiterung ist vorzugsweise konisch ausgebildet, so dass Partikel, die im Milchstrom sich befinden können und die in die Kammer gelangen, nicht zu einem Verstopfen der Austrittsöffnung führen.

Gegebenenfalls kann die Messeinheit mit wenigstens einem Temperatursensor ausgestaltet sein. Dieser wenigstens eine Temperatursensor kann für die Temperaturkompensation der Leitwertmessung genutzt werden.

Nach einem noch weiteren erfinderischen Gedanken wird eine Vorrichtung zur Bestimmung einer Milchmenge umfassend eine Einrichtung nach einem oder mehreren der Ansprüche 1 bis 18 vorgeschlagen, wobei wenigstens eine elektronische Schaltung vorgesehen ist, welche über Signalleitungen mit den wenigstens zwei elektrisch leitenden Elementen verbunden ist. Durch die erfindungsgemäße Ausgestaltung der Einrichtung und/oder der Vorrichtung wird erreicht, dass eine Milchmengenbestimmung im Fluss erfolgen kann. Da der Milchstrom die Strömungsrichtung nicht ändern muss kommt es auch nicht zu störenden Druckschwankungen. Es sind auch keine beweglichen Teile vorgesehen, die für die Messwert Aufnahme benötigt werden. Die Einrichtung bzw. die Vorrichtung ist daher sehr wartungsarm und einfach zu reinigen und desinfizieren.

Weitere Einzelheiten und Vorteile der Erfindung werden anhand der in der Zeichnung dargestellten Ausführungsbeispiele erläutert, ohne dass der Gegenstand der Erfindung auf diese konkreten Ausführungsbeispiele beschränkt wird.

Es zeigen:
- Fig. 1: eine Einrichtung im Schnitt und
- Fig. 2: die Einrichtung in Verbindung mit weiteren Teilen einer Melkanlage.

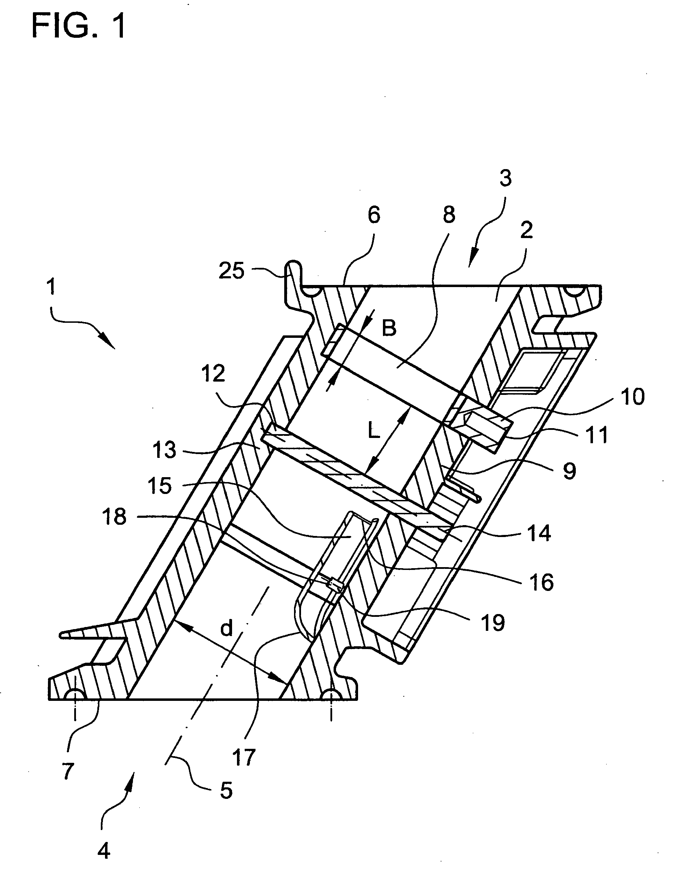

Fig. 1 zeigt eine Einrichtung zur Erfassung eines Milchstroms. Die Einrichtung weist ein im Wesentlichen rohrförmig ausgebildetes Bauteil 1 auf. Das Bauteil 1 ist vorzugsweise aus einem elektrisch nicht leitenden Kunststoff hergestellt. Die Herstellung des Bauteils 1 erfolgt vorzugsweise nach dem Spritzgussverfahren. Das Bauteil kann aus Polysulfon (PSU), Polyamid 12 (PA12) oder Polyphenylsulfon (PPSU) hergestellt sein. Andere Kunststoffe, welche lebensmittelverträglich sind, sind gleichfalls geeignet.

Das Bauteil 1 weist einen Kanal 2 auf. Der Kanal weist einen Eintritt 3 und einen Austritt 4 auf. Der Kanal 2 ist im Wesentlichen im Querschnitt kreisförmig. Mit dem Bezugszeichen 5 ist die Längsachse des Kanals bezeichnet. Im montierten Zustand der Einrichtung ist die Längsachse 5 gegenüber einer Vertikalen geneigt. Hierdurch wird erreicht, dass der Milchstrom zumindest teilweise an der Wand 9 des Kanals 2 strömt.

An den beiden Enden des Kanals 2 sind Flansche 6, 7 vorgesehen, welche zur Verbindung mit anderen Bauteilen einer Melkanlage geeignet und bestimmt sind.

Ein Milchstrom, welcher nicht dargestellt ist, tritt durch den Eintritt 3 in den Kanal 2 ein und durchströmt diesen, wobei der Milchstrom über den Austritt 4 aus dem Kanal ausströmt. Aus der Darstellung nach der Fig. 1 ist ersichtlich, dass im Kanal 2 ein ringförmiges Element 8 vorgesehen ist, welches elektrisch leitend ist. Das ringförmige Element 8 weist einen innere Durchmesser d auf, welcher im Wesentlichen dem Innendurchmesser des Kanals 2 entspricht. Das ringförmige Element ist ein integraler Bestandteil des Kanals 2. Durch die Wand 9 des Bauteils 1 erstreckt sich ein Anschlusselement 10 hindurch, welches elektrisch mit dem ringförmigen Element 8 verbunden ist. In dem dargestellten Ausführungsbeispiel weist das Anschlusselement ein Innengewinde 11 auf, in welches eine Schraube eingeschraubt werden kann, so dass beispielsweise eine Signalleitung mit dem Anschlusselement verbunden und an diesem festgelegt werden kann.

In Strömungsrichtung eines Milchstroms betrachtet ist hinter dem ringförmig ausgebildeten Element 8 ein elektrisch leitendes stiftförmig ausgebildetes Element 12 vorgesehen. Der Abstand L zwischen dem ringförmigen Element und dem stiftförmigen Element beträgt in dem dargestellten Ausführungsbeispiel vorzugsweise 12 mm. Das stiftförmige Element 12 durchdringt die Wand 9. Ein vorderes Ende des stiftförmigen Elementes erstreckt sich teilweise in die gegenüberliegende Wand 13. Aus der Darstellung in der Fig. 1 ist ersichtlich, dass das stiftförmige Element 12 die Längsachse 5 des Kanals unter einem Winkel von ca. 90 ° schneidet. Das stiftförmige Element 12 ist im Wesentlichen parallel zu den Stirnflächen des ringförmigen Elementes 8 angeordnet.

Der andere Endbereich 14 des stiftförmigen Elementes ragt aus der Wand 9 heraus. Es weist eine Anschlussmöglichkeit an eine Signalleitung auf.

Das stiftförmige Element 12 ist vorzugsweise im Querschnitt kreisförmig ausgebildet. Es weist insbesondere einen Durchmesser von ca. 3,0 mm auf. Das ringförmige Element 8 und das stiftförmige Element 12 sind mit einer nicht dargestellten elektrischen Schaltung verbunden. Mittels der elektrisch leitenden Elemente 8, 12 wird die Leitfähigkeit der fließenden Milch gemessen.

Unterhalb des stiftförmigen Elementes 12 ist eine Kammer 15 angeordnet. Die Kammer 15 ist im Bereich der Wand 9 vorgesehen. Die Kammer 15 weist eine Eintrittsöffnung 16 auf, durch die ein Teil der strömenden Milch in die Kammer 15 einfließen kann. Am tiefsten Punkt der Kammer 15 ist eine Austrittsöffnung 17 vorgesehen. Die Austrittsöffiiung 17 weist vorzugsweise einen Durchmesser von ca. 1,4 mm auf. Die Austrittsöffnung ist vorzugsweise so ausgebildet, dass deren Querschnitt sich nach außen hin erweitert. Durch diese Erweiterung von innen nach außen wird sichergestellt, dass die sich eventuell in der Milch befindenden Partikel sich nicht in der Austrittsöffnung festsetzen können. Größere Schmutzpartikel werden durch die Strömung der Milch aus der Kammer 15 rausgespült.

Innerhalb der Kammer 15 ist eine Messeinheit 18 angeordnet. Die Messeinheit 18 ist durch zwei nebeneinander angeordnete Elektroden 19 gebildet. Die Elektroden 19 sind im Wesentlichen stiftförmig ausgebildet. Sie weisen vorzugsweise einen Durchmesser von ca. 1,5 mm auf. Die Anordnung der Elektroden 19 ist so gewählt, dass sie ca. 7 mm voneinander beabstandet sind. Die Elektroden 19 sind über eine nicht dargestellte Anschlussmöglichkeit mit einer nicht dargestellten Schaltung verbunden. Die Elektroden 19 ragen ca. 3 bis 4 mm in die Kammer 15 hinein. Mittels der Messeinheit 18 wird in der Kammer 15 die Leitwertmessung der Milch durchgeführt.

Das stiftförmig ausgebildete Element 12 bildet ein Strömungselement, welches so vor der Eintrittsöffnung 16 der Kammer 15 angeordnet ist, dass eine Ausbildung von Turbolenzen in der Kammer 15 zumindest verringert, wenn nicht sogar verhindert wird. Dadurch, dass Turbolenzen in der Kammer 15 vermieden werden, wird erreicht, dass die Leitwertmessung der Milch innerhalb der Kammer 15 mit einer hohen Zuverlässigkeit erfolgt. Messfehler, die dadurch her rühren, dass die in die Kammer 15 strömende Milch mit Luft versetzt wird, wodurch sich der Leitwert des Gemisches ändert, konnte durch die Ausgestaltung nahezu eliminiert werden.

Die erfindungsgemäße Ausbildung der Einrichtung zur Erfassung eines Milchstroms liefert Messwerte, welche eine hohe Genauigkeit haben. Die Ausgestaltung der Einrichtung ist so gewählt, dass der Kanal und die Kammer gut gereinigt und entleert werden können. Eine Entleerung der Kammer 15 erfolgt selbsttätig. Die Einrichtung kann sowohl beim Start als auch am Ende eines Melkvorgangs ein Signal an eine Steuereinrichtung liefern, so dass beispielsweise beim Beenden eines Melkvorgangs die Pulsation abgeschaltet wird und ein Signal für die Abnahme des Melkzeugs generiert wird. Die Einrichtung kann auch als ein so genannter Kick-Off-Sensor genutzt werden. Kommt es während eines Melkvorgangs zu einem schlagartigen Lufteinbruch, so nimmt auch die zwischen den Elektroden 8 und 12 gemessene Leitfähigkeit schlagartig ab. Je nach Ausgestaltung der nicht dargestellten Schaltung und dem Zeitpunkt des Kick-Offs im Melkvorgang, kann dann eine Signalisierung oder eine Abnahme des Melkzeugs erfolgen.

Mit Hilfe der der Kammer 15 erfolgten Leitwertmessung kann der Verlauf des Leitwertes der Milch ermittelt werden. Dieser Verlauf erlaubt Rückschlüsse auf den Gesundheitszustand des milchgebenden Tieres.

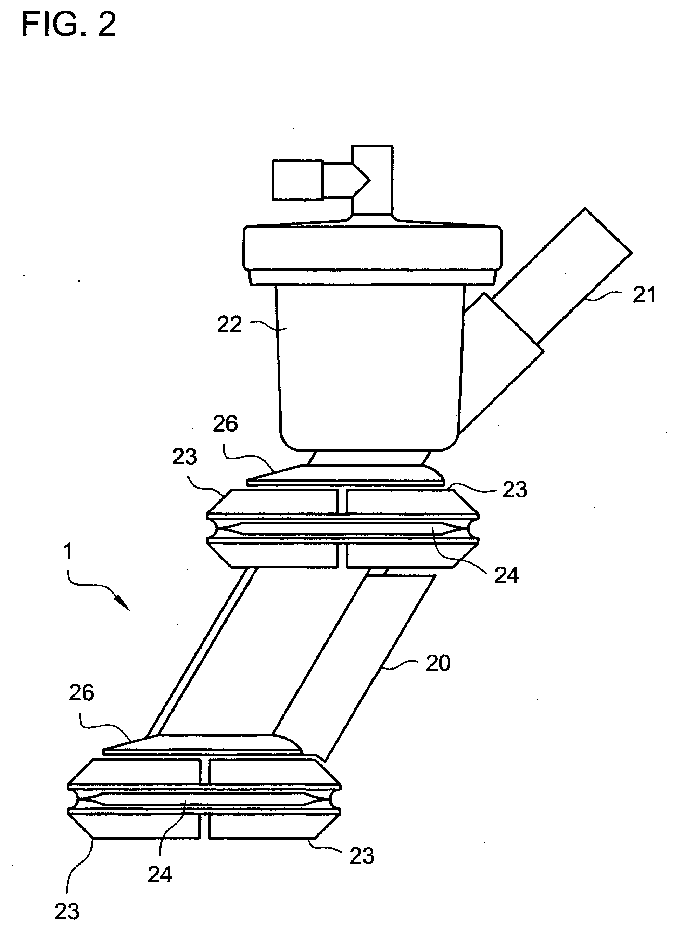

Fig. 2 zeigt die Anordnung der Einrichtung in Verbindung mit weiteren Bauteilen einer Melkanlage. Gleiche Bauteile der Einrichtung sind mit gleichen Bezugszeichen versehen. Aus der Fig. 2 ist das Bauteil 1 ersichtlich. Es ist erkennbar, dass das Bauteil 1 eine Anschlusskammer 20 aufweist, die die Anschlüsse der elektrischen leitenden Elemente und der Elektroden beherbergt. Das Bauteil 1 ist mit einem Milchrohr 21 verbunden. Das Milchrohr 21 weist ein Absperrmittel 22 auf, welches pneumatisch betätigbar ist. Ein solches Absperrmittel ist beispielsweise durch das Gebrauchsmuster 295 03 450.5 bekannt:

Das Milchrohr 21 weist einen korrespondierend zum Flansch 6 ausgebildeten Flansch auf. Die Flansche sind über zwei Verbindungselemente 23 miteinander verbunden. Die Verbindungselemente 23 sind halbschalenförmig ausgebildet. Sie weisen innen liegende Nuten auf, in die die Flansche eingreifen. Mittels eines federelastischen Elementes 24 werden die Verbindungselemente 23 kraftschlüssig verbunden. Eine entsprechende Verbindung kann mit dem Flansch des Bauteils 1 mit einem anderen Teil der Melkanlage erfolgen. Das Bauteil 21 weist einen Flansch 6 auf. Der Flansch 6 weist einen Vorsprung 25 auf, der in Form einer Nase ausgebildet ist. Der Vorsprung greift in eine entsprechend ausgebildete Vertiefung eines Flansches des Absperrmittels 22 ein. Durch diese Maßnahme wird zum einen eine definierte Montagelage und zum anderen eine verdrehsichere Verbindung zwischen dem Bauteil 1 und dem Absperrmittel 22 erreicht.

Aus der Darstellung in der Fig. 2 ist ersichtlich, dass die Verbindungselemente 23 durch entsprechend am Bauteil 1 ausgebildete Abweiser 26 eine Verschmutzung der Verbindungsstellen zumindest verringert wird.

Durch die erfindungsgemäße Ausgestaltung der Einrichtung zur Erfassung eines Milchstroms wird erreicht, dass eine Leitfähigkeitsmessung im Bereich von 1 mS/cm bis 12 mS/cm zuverlässig erfolgen kann. Darüber hinaus eröffnet die erfindungsgemäße Einrichtung die Bestimmung von Milchmengen im Milchvolumenstrom-Bereich von 0,0 bis 9,01/min.

### Bezugszeichenliste

- 1: -Bauteil
- 2: Kanal
- 3: Eintritt
- 4: Austritt
- 5: Längsachse
- 6: Flansch
- 7: Flansch
- 8: ringförmiges Element
- 9: Wand
- 10: Anschlusselement
- 11: Gewinde
- 12: stiftförmiges Element
- 13: Wand
- 14: Endbereich
- 15: Kammer
- 16: Eintrittsöffnung
- 17: Austrittsöffnung
- 18: Messeinheit
- 19: Elektrode
- 20: Anschlusskammer
- 21: Milchrohr
- 22: Absperrmittel
- 23: Verbindungselement
- 24: federelastisches Element
- 25: Vorsprung
- 26: Abweiser

## Patentansprüche

1. Einrichtung zur Erfassung eines Milchstroms mit einem Kanal (2), welcher einen Eintritt (3) und einen Austritt (4) aufweist, und mit wenigstens zwei elektrisch leitenden Elementen (8, 12), welche beabstandet zueinander im Kanal (2) angeordnet sind, wobei wenigstens ein Element (8) im Wesentlichen ringförmig ist und der Kanal (2) wenigstens eine Kammer (15) mit einer Messeinheit (18) zur Leitwertmessung der Milch aufweist, wobei die Kammer (15) eine Eintrittsöffnung (16) aufweist, und wobei die Kammer (15) in Strömungsrichtung der Milch betrachtet hinter den Elementen (8, 12) angeordnet ist, **dadurch gekennzeichnet, dass** wenigstens ein elektrisch leitendes Element (12) im wesentlichen stiftförmig ausgebildet ist, und dass vor der Eintrittsöffnung (16) der Kammer (15) ein Strömungselement angeordnet ist, und dass das Strömungselement wenigstens teilweise durch das stiftförmige Element (12) gebildet ist.

2. Einrichtung nach Anspruch 1, **dadurch gekennzeichnet, dass** der Kanal (2) wenigstens einen Abschnitt zwischen zwei benachbarten Elementen (8, 12) aufweist, welcher aus einem elektrisch nicht leitenden Material besteht.

3. Einrichtung nach Anspruch 2, **dadurch gekennzeichnet, dass** der Kanal (2) aus wenigstens einem elektrisch nicht leitenden Polymer gebildet ist.

4. Einrichtung nach Anspruch 1, 2 oder 3, **dadurch gekennzeichnet, dass** der Kanal (2) eine Längsachse (5) aufweist die gegenüber einer Vertikalen geneigt ist.

5. Einrichtung nach wenigstens einem der vorhergehenden Ansprüche 1 bis 4, **dadurch gekennzeichnet, dass** das wenigstens eine ringförmige Element (8) einen inneren Querschnitt aufweist, der im Wesentlichen einem Innenquerschnitt des Kanals (2) entspricht.

6. Einrichtung nach Anspruch 5, **dadurch gekennzeichnet, dass** das wenigstens eine ringförmige Element (8) einen inneren Durchmesser (d) aufweist, der vorzugsweise dem inneren Durchmesser des Kanals (2) entspricht.

7. Einrichtung nach einem der Ansprüche 1 bis 6, **dadurch gekennzeichnet, dass** das wenigstens eine ringförmige Element (8) ein integraler Bestandteil des Kanals (2) ist.

8. Einrichtung nach wenigstens einem der vorhergehenden Ansprüche 1 bis 7, **dadurch gekennzeichnet, dass** das wenigstens eine ringförmige Element (8) eine Breite (B) aufweist, wobei das Verhältnis der Breite (B) des ringförmigen Elementes (8) zum Innendurchmesser (d) des wenigstens einen ringförmigen Elementes (8) zwischen 0,1 und 25, vorzugsweise zwischen 3 und 5 liegt, insbesondere 4,3 beträgt.

9. Einrichtung nach wenigstens einem der vorhergehenden Ansprüche 1 bis 8, dadurch gekenntzeichnet, dass das wenigstens eine stiftförmigen Element (12) einen im Wesentlichen kreisförmigen Querschnitt aufweist.

10. Einrichtung nach Anspruch 9, **dadurch gekennzeichnet, dass** das wenigstens eine stiftförmige Element (12) eine Breite, vorzugsweise einen Durchmesser zwischen 1 mm und 8 mm, vorzugsweise zwischen 2,5 mm und 3,5 mm, insbesondere von 3,2 mm aufweist.

11. Einrichtung nach wenigstens einem der Ansprüche 1 bis 10, **dadurch gekennzeichnet, dass** das wenigstens eine stiftförmige Element (12) die Längsachse (5) des Kanals (2) unter einem Winkel zwischen 45° und 135°, vorzugsweise im Wesentlichen unter einem Winkel von 90° schneidet.

12. Einrichtung nach wenigstens einem der vorhergehenden Ansprüche 1 bis 11, **dadurch gekennzeichnet, dass** zwei benachbarte Elemente (8, 12) in einem Abstand (L) zueinander angeordnet sind, wobei das Verhältnis des Abstandes (L) zum Innendurchmesser (d) des wenigstens einen ringförmigen Elementes (12) zwischen 0,2 und 2,0, vorzugsweise zwischen 0,4 und 0,7, insbesondere 0,55 beträgt.

13. Einrichtung nach wenigstens einem der Ansprüche 1 bis 12, **dadurch gekennzeichnet, dass** in Strömungsrichtung der Milch betrachtet das stiftförmig ausgebildete Element (12) wenigstes einem ringförmigen Element (8) nachgeordnet ist.

14. Einrichtung nach wenigstens einem der vorhergehenden Ansprüche, **dadurch gekennzeichnet, dass** die Messeinheit (18) wenigstens zwei Elektroden (19) aufweist.

15. Einrichtung nach wenigstens einem der vorhergehenden Ansprüche, **dadurch gekennzeichnet, dass** die Kammer (15) eine Austrittöffnung (17) aufweist, vorzugsweise eine Austrittsöffnung (17), deren Querschnitt sich erweitert.

16. Einrichtung nach wenigstens einem der vorhergehenden Ansprüche, **dadurch gekennzeichnet, dass** die Messeinheit (18) wenigstens einen Temperatursensor aufweist.

17. Vorrichtung zur Bestimmung einer Milchmenge umfassend wenigstens eine Einrichtung nach einem oder mehreren der Ansprüche 1 bis 16 und wenigstens eine elektronische Schaltung welche über Signalleitungen mit den wenigstens zwei elektrisch leitenden Elementen (8, 12) verbunden ist.

## Claims

1. Device for detecting a milk flow having a channel (2) which has an inlet (3) and an outlet (4), and having at least two electrically conducting elements (8, 12) which are arranged spaced apart from one another in the channel (2), at least one element (8) being substantially annular and the channel (2) having at least one chamber (15) with a measuring unit (18) for conductometry of the milk, the chamber (15) having an inlet opening (16), and the chamber (15) being arranged downstream of the elements (8, 12) as viewed in the flow direction of the milk, **characterized in that** at least one electrically conducting element (12) is of substantially pin-shaped configuration, and **in that** a flow element is arranged upstream of the inlet opening (16) of the chamber (15), and **in that** the flow element is formed at least partially by the pin-shaped element (12).

2. Device according to Claim 1, **characterized in that** the channel (2) has at least one section between two adjacent elements (8, 12), which section is composed of an electrically non-conducting material.

3. Device according to Claim 2, **characterized in that** the channel (2) is formed from at least one electrically non-conducting polymer.

4. Device according to Claim 1, 2 or 3, **characterized in that** the channel (2) has a longitudinal axis (5) which is inclined with respect to a vertical.

5. Device according to at least one of preceding Claims 1 to 4, **characterized in that** the at least one annular element (8) has an internal cross section which corresponds substantially to an internal cross section of the channel (2).

6. Device according to Claim 5, **characterized in that** the at least one annular element (8) has an inner diameter (d) which preferably corresponds to the inner diameter of the channel (2).

7. Device according to one of Claims 1 to 6, **characterized in that** the at least one annular element (8) is an integral constituent part of the channel (2).

8. Device according to at least one of preceding Claims 1 to 7, **characterized in that** the at least one annular element (8) has a width (B), the ratio of the width (B) of the annular element (8) to the inner diameter (d) of the at least one annular element (8) being between 0.1 and 25, preferably between 3 and 5, in particular 4.3.

9. Device according to at least one of preceding Claims 1 to 8, **characterized in that** the at least one pin-shaped element (12) has a substantially circular cross section.

10. Device according to Claim 9, **characterized in that** the at least one pin-shaped element (12) has a width, preferably a diameter between 1 mm and 8 mm, preferably between 2.5 mm and 3.5 mm, in particular of 3.2 mm.

11. Device according to at least one of Claims 1 to 10, **characterized in that** the at least one pin-shaped element (12) intersects the longitudinal axis (5) of the channel (2) at an angle between 45° and 135°, preferably substantially at an angle of 90°.

12. Device according to at least one of preceding Claims 1 to 11, **characterized in that** two adjacent elements (8, 12) are arranged at a spacing (L) from one another, the ratio of the spacing (L) to the inner diameter (d) of the at least one annular element (8) being between 0.2 and 2.0, preferably between 0.4 and 0.7, in particular 0.55.

13. Device according to at least one of Claims 1 to 12, **characterized in that** the element (12) of pin-shaped configuration is arranged downstream of at least one annular element (8) as viewed in the flow direction of the milk.

14. Device according to at least one of the preceding claims, **characterized in that** the measuring unit (18) has at least two electrodes (19).

15. Device according to at least one of the preceding claims, **characterized in that** the chamber (15) has an outlet opening (17), preferably an outlet opening (17), the cross section of which widens.

16. Device according to at least one of the preceding claims, **characterized in that** the measuring unit (18) has at least one temperature sensor.

17. Apparatus for determining a quantity of milk, comprising a device according to one or more of Claims 1 to 16 and at least one electronic circuit which is connected via signal lines to the at least two electrically conducting elements (8, 12).

## Revendications

1. Dispositif pour détecter un écoulement de lait avec un canal (2), qui présente une entrée (3) et une sortie (4), et avec au moins deux éléments électriquement conducteurs (8, 12), qui sont disposés à distance l'un de l'autre dans le canal (2), dans lequel au moins un élément (8) est essentiellement annulaire et le canal (2) présente au moins une chambre (15) avec une unité de mesure (18) pour mesurer la conductance du lait, dans lequel la chambre (15) présente une ouverture d'entrée (16), et dans lequel la chambre (15), considérée dans la direction d'écoulement du lait, est disposée après les éléments (8, 12), **caractérisé en ce qu'**au moins un élément électriquement conducteur (12) est réalisé essentiellement en forme de barre, et **en ce qu'**un élément d'écoulement est disposé avant l'ouverture d'entrée (16) de la chambre (15), et **en ce que** l'élément d'écoulement est formé au moins en partie par l'élément en forme de barre (12).

2. Dispositif selon la revendication 1, **caractérisé en ce que** le canal (2) présente au moins une partie entre deux éléments voisins (8, 12), qui est constituée d'un matériau électriquement non conducteur.

3. Dispositif selon la revendication 2, **caractérisé en ce que** le canal (2) est réalisé en au moins un polymère électriquement non conducteur.

4. Dispositif selon la revendication 1, 2 ou 3, **caractérisé en ce que** le canal (2) présente un axe longitudinal (5), qui est incliné par rapport à la verticale.

5. Dispositif selon au moins une des revendications précédentes 1 à 4, **caractérisé en ce que** ledit au moins un élément annulaire (8) présente une section transversale intérieure, qui correspond essentiellement à une section transversale intérieure du canal (2).

6. Dispositif selon la revendication 5, **caractérisé en ce que** ledit au moins un élément annulaire (8) présente un diamètre intérieur (d), qui correspond de préférence au diamètre intérieur du canal (2).

7. Dispositif selon l'une quelconque des revendications précédentes 1 à 6, **caractérisé en ce que** ledit au moins un élément annulaire (8) fait intégralement partie du canal (2).

8. Dispositif selon au moins une des revendications précédentes 1 à 7, **caractérisé en ce que** ledit au moins un élément annulaire (8) présente une largeur (B), dans lequel le rapport de la largeur (B) de l'élément annulaire (8) au diamètre intérieur (d) dudit au moins un élément annulaire (8) se situe entre 0,1 et 25, de préférence entre 3 et 5, et vaut en particulier 4,3.

9. Dispositif selon au moins une des revendications précédentes 1 à 8, **caractérisé en ce que** ledit au moins un élément en forme de barre (12) présente une section transversale essentiellement circulaire.

10. Dispositif selon la revendication 9, **caractérisé en ce que** ledit au moins un élément en forme de barre (12) présente une largeur, de préférence un diamètre entre 1 mm et 8 mm, de préférence entre 2,5 mm et 3,5 mm, en particulier de 3,2 mm.

11. Dispositif selon au moins une des revendications précédentes 1 à 10, **caractérisé en ce que** ledit au moins un élément en forme de barre (12) coupe l'axe longitudinal (5) du canal (2) sous un angle compris entre 45° et 135°, de préférence essentiellement sous un angle de 90°.

12. Dispositif selon au moins une des revendications précédentes 1 à 11, **caractérisé en ce que** deux éléments voisins (8, 12) sont disposés à une distance (L) l'un de l'autre, dans lequel le rapport de la distance (L) au diamètre intérieur (d) dudit au moins un élément annulaire (8) vaut entre 0,2 et 2,0, de préférence entre 0,4 et 0,7, et en particulier 0,55.

13. Dispositif selon au moins une des revendications précédentes 1 à 12, **caractérisé en ce que**, considéré dans la direction d'écoulement du lait, l'élément (12) réalisé en forme de barre est disposé après au moins un élément annulaire (8).

14. Dispositif selon au moins une des revendications précédentes, **caractérisé en ce que** l'unité de mesure (18) comporte au moins deux électrodes (19).

15. Dispositif selon au moins une des revendications précédentes, **caractérisé en ce que** la chambre (15) présente une ouverture de sortie (17), de préférence une ouverture de sortie (17) dont la section transversale s'élargit.

16. Dispositif selon au moins une des revendications précédentes, **caractérisé en ce que** l'unité de mesure (18) comporte au moins un capteur de température.

17. Dispositif pour déterminer un débit de lait comprenant au moins un dispositif selon une ou plusieurs des revendications 1 à 16 et au moins un circuit électronique qui est raccordé auxdits au moins deux éléments électriquement conducteurs (8, 12) par des lignes de signalisation.
